(19) Europäisches Patentamt

European Patent Office

Office européen des brevets

(11) **EP 1 167 998 A2**

(12) **EUROPÄISCHE PATENTANMELDUNG**

(43) Veröffentlichungstag:
02.01.2002 Patentblatt 2002/01

(51) Int Cl.⁷: **G01T 1/167**

(21) Anmeldenummer: 01113875.7

(22) Anmeldetag: **07.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **19.06.2000 DE 10029156**

(71) Anmelder: **FORSCHUNGSZENTRUM JÜLICH GMBH**
**52425 Jülich (DE)**

(72) Erfinder:
- **Caspary, Guido**
**52428 Jülich (DE)**
- **Kroth, Kornelius, Dr.**
**52441 Linnich (DE)**
- **Sanden, Hans-Jürgen, Dr.**
**52428 Jülich (DE)**

(74) Vertreter: **Gille Hrabal Struck Neidlein Prop Roos**
**Patentanwälte Brucknerstrasse 20**
**40593 Düsseldorf (DE)**

(54) **Verfahren zur gamma-spektrometrischen Aktivitätsbestimmung an grossvolumigen Objekten**

(57) Die Erfindung betrifft ein Verfahren zur gammaspektrometrischen Aktivitätsbestimmung an großvolumigen Objekten mit folgenden Schritten:

a) Messen der von dem Objekt ausgehenden Gamma-Strahlung mit einem außerhalb des Abfallgebindes aufgestellten Detektor,
b) Ermittlung der effektiven Schwächung der primären Strahlung aufgrund der im Objekt stattfindenden Gamma-Absorption,
c) Bestimmen der Aktivität der im Objekt enthaltenen gamma-aktiven Radionuklide Radionuklide unter Einbeziehung der aus der ermittelten effektiven Schwächung sich ergebenden Schwächungskorrektur.

Aufgabe der Erfindung ist die Schaffung eines Verfahrens der eingangs genannten Art, welches auch bei inhomogener Verteilung der radioaktiven und nicht radioaktiven Stoffe in einem großvolumigen Objekt gute Ergebnisse liefert.

Im Unterschied zum Stand der Technik wird bei dem erfindungsgemäßen Verfahren die Compton-Streustrahlung gemessen, und mit Hilfe der gemessenen Compton-Streustrahlung die effektive Schwächung der primären Gamma-Strahlung ermittelt. Hierunter ist zu verstehen, das die gemessene Compton-Streustrahlung in die weitere Auswertung der Messergebnisse einbezogen wird, um die gesuchte Aktivität zu erhalten.

Fig. 1

**EP 1 167 998 A2**

**Beschreibung**

Die Erfindung betrifft ein Verfahren zur gamma-spektrometrischen Aktivitätsbestimmung an großvolumigen Objekten mit folgenden Schritten:

> a) Messen der von dem Objekt ausgehenden Gamma-Strahlung mit einem außerhalb des Abfallgebindes aufgestellten Detektor,
> b) Ermittlung der effektiven Schwächung der primären Strahlung aufgrund der im Objekt stattfindenden Gamma-Absorption,
> c)Bestimmen der Aktivität der im Objekt enthaltenen gamma-aktiven Radionuklide unter Einbeziehung der aus der ermittelten effektiven Schwächung sich ergebenden Schwächungskorrektur.

Ein radioaktives Abfallgebinde stellt ein typisches Beispiel für ein großvolumiges Objekt dar. Für die Zwischen- bzw. Endlagerung von radioaktiven Abfallgebinden muss deren Inventar an radioaktiven Stoffen bekannt sein. Notfalls muss das Aktivitätsinventar durch zerstörende bzw. zerstörungsfreie Messverfahren ermittelt werden. Zur Inventarbestimmung von gamma-aktiven Radionukliden haben sich sogenannte Gamma-Scan-Verfahren bewährt, wie den Erfindern aus der Praxis bekannt ist. Diese liefern die Inventare aller nachweisbaren Gamma-Strahler.

Allerdings sind die Verfahren nur dann zuverlässig anwendbar, wenn die Aktivität, die Matrixdichte und die Materialzusammensetzung homogen über das Volumen des Abfallgebindes verteilt sind. Unter Matrix wird das im Abfallgebinde enthaltene nicht radioaktive Material verstanden. Die Aktivität wird regelmäßig unterschätzt, wenn diese Bedingungen nicht erfüllt sind.

Verbesserungen der Standardmethode werden durch Korrekturverfahren für die auftretende Schwächung der Primärstrahlung in der Matrix erreicht. Ein gängiges Korrekturverfahren besteht in der Verwendung einer externen Transmissionsquelle zur Charakterisierung der Schwächungseigenschaften der Matrix.

Ein Nachteil dieses Korrekturverfahrens besteht darin, dass sowohl die Matrix als auch die Verteilung der radioaktiven Stoffe weitgehend homogen verteilt sein müssen, um zu guten Ergebnissen zu gelangen. Daher kann dieses Verfahren für konzentrierte Aktivitätsverteilungen nur sehr eingeschränkt verwendet werden.

Aufgabe der Erfindung ist die Schaffung eines Verfahrens der eingangs genannten Art, welches auch bei inhomogener Verteilung der radioaktiven und nicht radioaktiven Stoffe in einem großvolumigen Objekt gute Ergebnisse liefert.

Die Aufgabe der Erfindung wird durch ein Verfahren mit den Merkmalen des ersten Anspruchs gelöst. Vorteilhafte Ausgestaltungen ergeben sich aus den Unteransprüchen.

Das anspruchsgemäße Verfahren zur gamma-spektrometrischen Aktivitätsbestimmung an großvolumigen Objekten umfasst folgende Schritte.

Messen der von dem Objekt ausgehenden Gamma-Strahlung mit einem außerhalb des Abfallgebindes aufgestellten Detektor,

Ermittlung der effektiven Schwächung der primären Strahlung aufgrund der im Objekt stattfindenden Gamma-Absorption,

Bestimmen der Aktivität der im Objekt enthaltenen gamma-aktiven Radionuklide unter Einbeziehung der aus der ermittelten effektiven Schwächung sich ergebenden Schwächungskorrektur.

Im Unterschied zum Stand der Technik wird bei dem erfindungsgemäßen Verfahren die Compton-Streustrahlung gemessen, und mit Hilfe der gemessenen Compton-Streustrahlung die effektive Schwächung der primären Gamma-Strahlung ermittelt. Hierunter ist zu verstehen, das die gemessene Compton-Streustrahlung in die weitere Auswertung der Messergebnisse einbezogen wird, um die gesuchte Aktivität zu erhalten.

Wird die Compton-Streustrahlung einbezogen, so können im Vergleich zum Stand der Technik genauere Ergebnisse erzielt werden. Es hat sich nämlich gezeigt, dass die Compton-Streustrahlung ein Maß für die auftretende Schwächung der Primärstrahlung darstellt.

Es gibt verschiedene Möglichkeiten, das Messergebnis eines Gamma-Scan-Verfahrens unter Einbeziehung der Compton-Streustrahlung zu korrigieren. Nachfolgend werden bevorzugte Ausgestaltungen dargestellt.

Bevorzugt wird bei dem anspruchsgemäßen Verfahren mit Hilfe einer Kalibrierfunktion die effektive Schwächung der primären Gamma-Strahlung ermittelt.

Es wird insbesondere eine Kalibrierfunktion angefertigt, bei der das Verhältnis der an einem Modellabsorber bestimmten Intensität der Compton-Streustrahlung zu der an dem Modellabsorber bestimmten Intensität der primären Gamma- Strahlung gegen die Massenbelegung des Modellabsorbers aufgetragen wird. Das Verhältnis der Intensität der an dem Objekt gemessenen primären Compton-Streustrahlung zur Intensität der an dem Objekt gemessenen primären Gamma-Strahlung wird gebildet, und die zu diesem Verhältnis passende effektive Massenbelegung wird anhand der Kalibrierfunktion ermittelt. Aus der effektiven Massenbelegung wird schließlich die Schwächung der primären Gamma-Strahlung berechnet.

Bevorzugt wird lediglich die Klein-Winkel-Compton-Streustrahlung gemessen, und mit Hilfe der gemessenen Klein-Winkel-Compton-Streustrahlung die im Objekt stattfindende Schwächung der primären Gammastrahlung ermittelt. Die Klein-Winkel-Compton-Streustrahlung ist ein besonders gut geeignetes Maß, um die Schwächung der primären Gamma-Strahlung zu ermitteln.

Das Verfahren zeichnet sich dadurch aus, dass die in einem Objekt durch Compton-Wechselwirkung von Gamma-Strahlung mit Materie entstehende Compton-Streustrahlung mit einem hochauflösenden Detektor nachgewiesen und zur Bestimmung der Schwächung der primären Gamma-Strahlung verwendet wird. Die primäre Strahlung kann entweder von einer externen, außerhalb des Objekts befindlichen Gamma-Quelle stammen oder von im Objekt vorhandenen Radionukliden ausgesendet werden.

Der dem Verfahren zugrundeliegende physikalische Effekt ist die Compton-Streuung, die zu einem streuwinkelabhängigen Energieverlust der Primärstrahlung führt. Der differentielle Wirkungsquerschnitt für diesen Effekt wird durch die Klein-Nishina-Formel (R. D. Evans,'The Atomic Nucleus', McGraw-Hill, New York 1955, S. 683) beschrieben.

Durch die im Objekt auftretende Compton-Streustrahlung entsteht im Impulshöhenspektrum der nachgewiesenen Strahlung ein für das Schwächungsverhalten charakteristischer Compton-Untergrund, der zusätzlich zu dem im Detektor entstehenden Compton-Untergrund registriert wird. Durch geeignete analytischnumerische Behandlung des Spektrums kann der im Detektor auftretende Compton-Untergrund von der Compton-Streustrahlung im Objekt separiert werden. Daher kann das Schwächungsverhalten im Objekt bestimmt werden.

Das Schwächungsverhalten der Streustrahlung ist insbesondere dann repräsentativ für das der Primärstrahlung, wenn nicht das gesamte Streuspektrum sondern nur der unter kleinen Streuwinkeln auftretende Streuanteil - die sogenannte Klein-Winkel-Compton-Streuung - verwendet wird. Bei kleinen Streuwinkeln tritt ein so geringer Energieverlust auf, dass die Schwächungskoeffizienten der Primär- und Streustrahlung nahezu identisch sind. Die durch Kleinwinkelstreuung entstehenden Photonen machen sich im Spektrum durch eine Erhöhung des Untergrunds in einem engen Energiebereich unterhalb des Photopeaks der entsprechenden Primärstrahlung bemerkbar. Für die 1333 keV-Strahlung des Co-60 hat sich ein maximaler Streuwinkel von 10° als geeignet erwiesen. Für diese Bedingungen wird der zu analysierende Energiebereich im Spektrum auf 1281-1333 keV bevorzugt eingeschränkt.

Der Fächmann kann durch wenige Versuche feststellen, wie klein der jeweilige maximale Streuwinkel in Abhängigkeit von der Energie der Strahlung gewählt werden sollte, damit die bei der vorgenannten Kleinwinkelstreuung entstehenden Photonen die gewünschte Information in möglichst guter Weise liefern.

Die Messgröße des Verfahrens ist in einer Ausführungsform das Verhältnis der Intensität der Klein-Winkel-Compton-Streuung zu der Intensität des Photopeaks der entsprechenden primären Strahlung. Die Messgröße wird numerisch durch ein Least-Square-Fit-Verfahren zum Beispiel in folgender Weise abgeleitet:

    1. Anpassung einer geeigneten parametrischen Fit-Funktion zur Bestimmung des niederenergetischen Untergrundes durch Klein-Winkel-Streuung: B = f (E)

    2. Integration des Untergrundes in einem beschränkten Energiebereich $I_s$ = Integral (B(E)) von $E_{min}$ bis $E_{max}$

    3. Bildung des Verhältnisses von Untergrundsignal und Nettopeak-Fläche $I_p$:

$$S = I_s / I_p$$

Das so abgeleitete Signal ist proportional zur Massenbelegung $\rho*x$. In einem eingeschränkten Bereich von Massenbelegungen ist das Messsignal für ein gegebenes Absorbermaterial und einer gegebenen Gamma-Energie sogar annähernd linear abhängig von der Massenbelegung und kann durch folgende Beziehung beschrieben werden:
Formel:

$$I_s/I_p = \{\mu_c/(\mu_s - \mu_p)\} \{1 - \exp[-(\mu_s - \mu_p)x]\}$$

wobei

    $I_s$: Integral der Klein-Winkel-Comptonstreuung
    $I_p$: Integral des Photopeaks
    $\mu_c$: integrierter linearer Schwächungskoeffizient der Klein-Winkel-Comptonstreuung
    $\mu_p$: totaler linearer Schwächungskoeffizient der Primärstrahlung
    $\mu_s$: totaler linearer Schwächungskoeffizient der Klein-Winkel-Comptonstreuung

Die zu verwendenden Integrationsgrenzen $E_{min}$ und $E_{max}$ werden bevorzugt aus folgender Gleichung für einen gegebenen maximalen Streuwinkel $\alpha$ nach folgender Gleichung abgeleitet.

$$E(\alpha) = E/\{1 + [E(1 - \cos \alpha) / (m_0 c^2)]\}$$

E: Energie, $m_0 c^2$ = 511 keV.

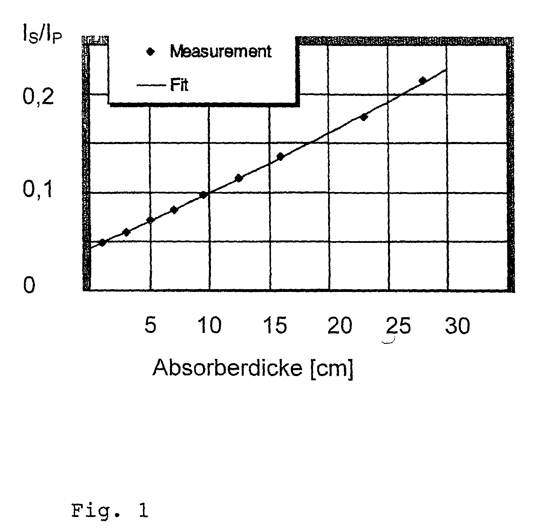

Figur 1 zeigt das experimentell gemessene Messsignal in Abhängigkeit von der Dicke eines Al-Absorbers für die 1333 keV-Strahlung des Co-60. Ein maximaler Streuwinkel von 10° wurde zugrunde gelegt. Die Figur verdeutlicht, dass aus der Größe des Messsignals $I_s/I_p$ die Dicke des Absorbers ermittelt werden kann.

Ein Anwendungsbeispiel stellt die Radioaktivitätsbestimmung in Abfallgebinden

Eine typische Anwendung des anspruchsgemäßen Verfahrens bietet sich im Bereich der zerstörungsfreien Aktivitätsbestimmung von großvolumigen Abfallgebinden an. Das Verfahren erlaubt eine deutlich verbesserte Aktivitätsbestimmung, da die Schwächungskorrektur aus der Schwächung der Primärstrahlung direkt abgeleitet wird, ohne dass dazu eine Kenntnis der Position der lokalen Aktivität im Gebinde notwendig ist. Das Verfahren ist auch insbesondere dann anwendbar, wenn die Matrix nicht homogen verteilt ist, und z. B. innere Abschirmungsstrukturen vorhanden sind.

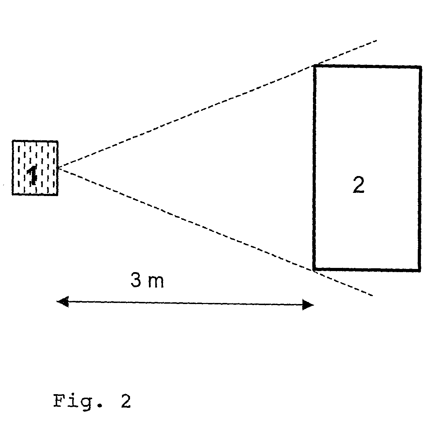

Ein typischer Messaufbau ist in der Figur 2 dargestellt.

Zunächst wird die für das Verfahren günstigste Messposition aus zum Beispiel vier Positionen ausgewählt. Die günstigste Position ist diejenige, die das stärkste Signal liefert. Das großvolumige Objekt 1 wird dann mit Hilfe des Detektors 2 vermessen. An dieser Position wird dann die Emissionsmessung durchgeführt und nach dem beschriebenen Verfahren die effektive Schwächung ermittelt. Diese dient dann zur Schwächungskorrektur der Primärstrahlung für die Bestimmung der Aktivität.

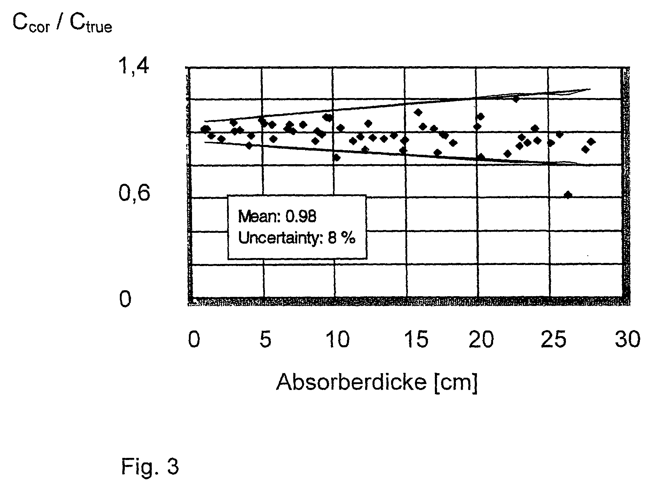

Die Anwendbarkeit des hier beschriebenen Verfahrens für diese Aufgabenstellung wurde anhand von Mock-Up-Konfigurationen nachgewiesen. Die nachfolgende Figur 3 zeigt das Ergebnis der Auswertung von Aktivitätsmessungen für eine Co-60-Punktquelle, die an einer beliebigen Position in einem 200 1 - Fass mit einer Matrix-Dichte von 2,7 g/cm$^3$ untergebracht war. Berechnet wurde das Verhältnis der nach diesem Verfahren korrigierten Aktivität $C_{cor}$ zur wahren Aktivität $C_{true}$ als Funktion der durchdrungenen Weglänge im Gebinde. Für diesen Fall lieferte die Auswertung nach diesem Verfahren ohne Kenntnis der Position der Punktquelle eine mittlere relative Aktivität von 0,98 $\pm$ 0,08 bezogen auf die wahre Aktivität.

## Patentansprüche

1. Verfahren zur gamma-spektrometrischen Aktivitätsbestimmung an großvolumigen Objekten mit folgenden Schritten:

Messen der von dem Objekt ausgehenden Gamma-Strahlung mit einem außerhalb des Abfallgebindes aufgestellten Detektor,

Ermittlung der effektiven Schwächung der primären Strahlung aufgrund der im Objekt stattfindenden Gamma-Absorption,

Bestimmen der Aktivität der im Objekt enthaltenen gamma-aktiven Radionuklide unter Einbeziehung der aus der ermittelten effektiven Schwächung sich ergebenden Schwächungskorrektur,

**dadurch gekennzeichnet, dass**
die Compton- Streustrahlung gemessen wird, und mit Hilfe der gemessenen Compton- Streustrahlung die effektive Schwächung der primären Gamma-Strahlung ermittelt wird.

2. Verfahren nach Anspruch 1, bei dem unter Einbeziehung einer Kalibrierfunktion die effektive Schwächung der primären Gamma-Strahlung ermittelt wird.

3. Verfahren nach Anspruch 1 oder 2,

- bei dem eine Kalibrierfunktion angefertigt wird, bei der das Verhältnis der an einem Modellabsorber bestimmten Intensität der Compton-Streustrahlung zu der an dem Modellabsorber bestimmten Intensität der primären Gamma-Strahlung gegen die Massenbelegung des Modellabsorbers aufgetragen wird,

- bei dem das Verhältnis der Intensität der an dem Objekt gemessenen primären Compton-Streustrahlung zur Intensität der an dem Objekt gemessenen primären Gamma-Strahlung gebildet wird, und die zu diesem Verhältnis passende effektive Massenbelegung anhand der Kalibrierfunktion ermittelt wird,
bei dem aus der effektiven Massenbelegung die Schwächung der primären Gamma-Strahlung berechnet wird.

4. Verfahren nach einem der vorhergehenden Ansprüche, bei dem die Klein-Winkel-Compton-Streustrahlung gemessen wird, und mit Hilfe der gemessenen Klein-Winkel-Compton-Streustrahlung die im Objekt stattfindende Schwächung der primären Gammastrahlung ermittelt wird.

Fig. 1

Fig. 2

Fig. 3